# EUROPEAN PATENT APPLICATION

(11) **EP 2 385 520 A2**
(43) Date of publication of application: **09.11.2011**
(21) Application number: 11164799.6
(22) Date of filing: 04.05.2011
(51) Int. Cl.: G10L 15/26, G10L 15/22

(54) **Method and device for generating text from spoken word**

(30) Priority: 06.05.2010 US 331937 P; 28.05.2010 US 789734
(71) Applicant: Sony Ericsson Mobile Communications AB, 221 88 Lund (SE)
(72) Inventor: Foxenland, Eral, 217 41, Malmö (SE)
(74) Representative: VALEA AB

(57) **Abstract**

A method and a user device (110) including receiving a vocal input including words spoken by a user; determining vocal characteristics associated with the vocal input mapping the vocal characteristics to textual characteristics; and generating a voice-to-expressive text that includes, in addition to text corresponding to the words spoken by the user, a textual representation of the vocal characteristics based on the mapping.

## Description

### TECHNICAL FIELD

The present invention relates to a method and a user device for receiving spoken word and generating text.

### BACKGROUND

Communication services, such as voice-to-text, provide a means for converting speech to text. Users may use voice-to-text as an alternate way to input text. For example, a user may author a text message, such as an e-mail message, a short messaging service (SMS) message, a multimedia messaging service (MMS) message, an instant message (IM), etc., or enter text within a document (e.g., on a web page, etc.,) using voice-to-text.

### SUMMARY

According to one implementation, a method may comprise receiving a vocal input including words spoken by a user; determining vocal characteristics associated with the vocal input; mapping the vocal characteristics to textual characteristics; and generating a voice-to-expressive text that includes, in addition to text corresponding to the words spoken by the user, a textual representation of the vocal characteristics based on the mapping.

Additionally, the vocal characteristics may include one or more of pitch, intonation, tonal quality, volume, gender of the user, or age of the user, and the textual characteristics may include one or more of font size, font weight, font style, font effects, capitalization, punctuation, or color.

Additionally, the method may further comprise determining a location of the user; and including an image or an icon representative of the location with the voice-to-expressive text.

Additionally, the method may further comprise determining a background ambience associated with a location of the user; and including an image or an icon representative of the background ambience to the voice-to-expressive text.

Additionally, the voice-to-expressive text may comprise one of an e-mail, a simple messaging service message, a multimedia messaging service message, or an instant message.

Additionally, the method may further comprise determining a tempo associated with the words spoken by the user; and displaying the voice-to-expressive text according to the tempo.

Additionally, the textual characteristics include font style, gender, and age, and the method may further comprise storing font style categories corresponding to gender and age; obtaining a facial expression of the user; determining at least one of a gender of the user or an age of the user based on the facial expression; and wherein the mapping may further comprise mapping at least one of a font style to the gender of the user or a font style to the age of the user based on the stored font style categories.

Additionally, the method may further comprise receiving a text communication that includes a first voice-to-expressive text; and identifying a lingo shared between the user and another user in the first voice-to-expressive text; and wherein when the vocal input includes the lingo, the generating may further comprise generating the textual representation of the lingo to correspond to the textual representation of the lingo included in the first voice-to-expressive text. According to another implementation, a user device may comprise components configured to receive a vocal input that includes words spoken by a user; perform voice analysis to determine vocal characteristics associated with the vocal input; map the vocal characteristics to textual characteristics; and generate a voice-to-expressive text that includes text corresponding to the words spoken by the user and a textual representation of the vocal characteristics based on the mapping. Such components may comprise one or more memories storing instructions and one or more processing systems to execute the instructions.

Additionally, the user device may comprise a radio telephone.

Additionally, when performing voice analysis the components may be configured to determine one or more of pitch, intonation, tonal quality, volume, gender of the user, or age of the user; and wherein the textual characteristics include one or more of font size, font weight, font style, font effects, capitalization, punctuation, or color.

Additionally, the voice-to-expressive text comprises one of an e-mail, a simple messaging service message, a multimedia messaging service message, or an instant message.

Additionally, the components may be further configured to obtain a facial expression of the user; determine one or more of a mood of the user, an age of the user, or a gender of the user; and wherein the textual characteristics include color and font style, and when mapping, the components may be further configured to perform one or more of map the mood of the user to a color of the text corresponding to the words spoken by the user; map the age of the user to a font style category corresponding to the age of the user; or map the gender of the user to a font style category corresponding to the gender of the user.

Additionally, the components may be further configured to determine a background ambience associated with a location of the user; and provide an image or an icon representative of the background ambience to the voice-to-expressive text.

Additionally, the components may be further configured to determine a location of the user; and include an image or an icon representative of the location to the voice-to-expressive text.

Additionally, the components may be further configured to determine a tempo associated with the words spoken by the user; and display the voice-to-expressive text according to the tempo, wherein if the words spoken by the user includes a pause exceeding a threshold value of time, the displaying may include displaying a first portion of the voice-to-expressive text occurring before the pause for a first period of time; followed by not displaying the first portion of the voice-to-expressive text; and followed by displaying a second portion of the voice-to-expressive text occurring after the pause for a second period of time.

According to yet another implementation, a computer-readable medium may include instructions that are executable by at least one processing system. The computer-readable medium storing the instructions, when executed may receive a vocal input that includes words spoken by a user; perform voice analysis to determine vocal characteristics associated with the vocal input; map the vocal characteristics to textual characteristics; and generate a voice-to-expressive text that includes text corresponding to the words spoken by the user and a textual representation of the vocal characteristics based on the mapping.

Additionally, the vocal characteristics may include one or more of pitch, tonal quality, volume, gender of the user, or age of the user, and the textual characteristics may include one or more of font size, font weight, font style, font effects, capitalization, punctuation, or color.

Additionally, the computer-readable medium may store one or more instructions to determine a tempo associated with the words spoken by the user; and display the voice-to-expressive text according to the tempo.

Additionally, a user device in which the computer-readable medium resides may comprise a radio telephone.

### BRIEF DESCRIPTION OF THE DRAWINGS

The accompanying drawings, which are incorporated in and constitute a part of this specification, illustrate exemplary embodiments described herein and, together with the description, explain these exemplary embodiments. In the drawings:

Figs. 1A and 1B are diagrams illustrating an exemplary environment in which an exemplary embodiment for generating voice-to-expressive text may be implemented;

Fig. 2 is a diagram illustrating an exemplary user device in which exemplary embodiments described herein may be implemented;

Fig. 3 is a diagram illustrating exemplary components of the user device;

Fig. 4 is a diagram illustrating exemplary functional components of the user device;

Fig. 5 is a diagram illustrating an exemplary mapping between vocal characteristics and textual characteristics; and

Fig. 6 is a flow diagram illustrating an exemplary process for converting voice to expressive text.

### DETAILED DESCRIPTION

The following detailed description refers to the accompanying drawings. The same reference numbers in different drawings may identify the same or similar elements. Also, the following description does not limit the invention, which is defined by the claims.

### OVERVIEW

According to an exemplary embodiment, when a user uses voice-to-text conversion, the text may include expressive textual characteristics corresponding to the vocal characteristics spoken or associated with the user. By way of example, but not limited thereto, pitch of the voice, gender of the user, age of the user, tempo of the words spoken, volume of the voice, etc., may be expressed by textual characteristics. Additionally, other contextual characteristics may be included with the text, such as, for example, location of the user, background ambience associated with the user, etc. In this way, text may be more expressive and/or more closely resemble characteristics associated with its vocal counterpart than conventional voice-to-text conversion.

### EXEMPLARY ENVIRONMENT

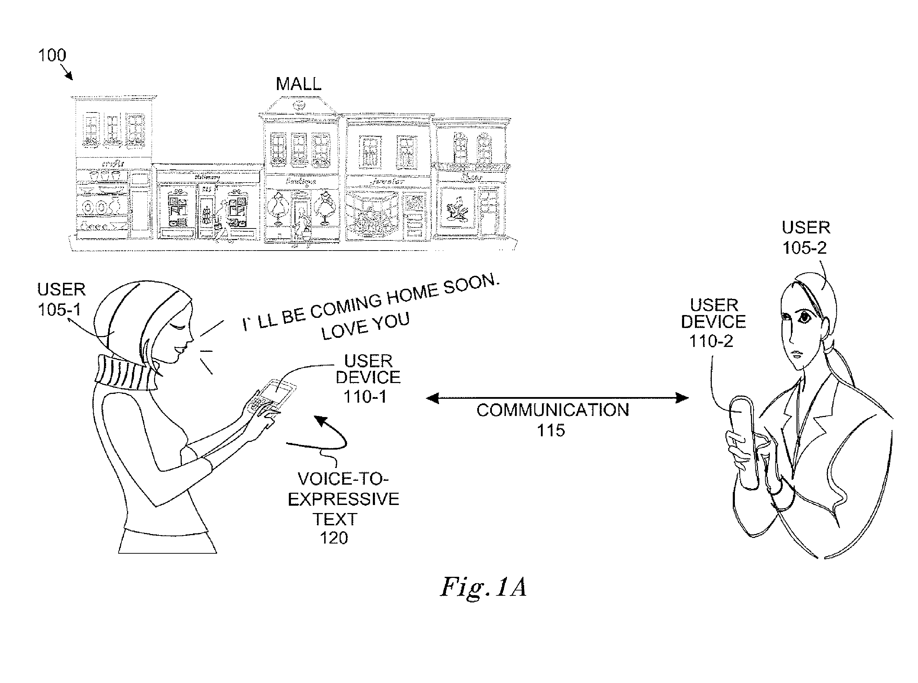

Fig. 1A is a diagram illustrating an exemplary environment 100 in which an exemplary embodiment for generating voice-to-expressive text may be implemented. As illustrated in Fig. 1A, environment 100 may include users 105-1 and 105-2 and user devices 110-1 and 110-2 (referred to generally as user device 110 or user devices 110). Environment 100 may include wired and/or wireless connections between user devices 110.

The number of devices and configuration in environment 100 is exemplary and provided for simplicity. In practice, environment 100 may include additional devices, fewer devices, different devices, and/or differently arranged devices than those illustrated in Fig. 1A. For example, environment 100 may include a network to allow users 105-1 and 105-2 to communicate with one another.

User device 110 may correspond to a portable device, a mobile device, a handheld device, or a stationary device. By way of example, but not limited thereto, user device 110 may comprise a telephone (e.g., a smart phone, a radio telephone, a cellular phone, an Internet Protocol (IP) telephone, etc.), a personal digital assistant (PDA) device, a computer (e.g., a tablet computer, a laptop computer, a palmtop computer, a desktop computer, etc.), and/or some other type of end device. User device 110 may provide voice-to-expressive text services, as described further below.

Referring to Fig. 1A, according to an exemplary scenario, user 105-1 may send a communication 115 to user 105-2. For example, user 105-1 may be at the mall when she decides to let her mother (i.e., user 105-2) know that she will be coming home soon. User 105-1 may vocalize her message (e.g., I'll be coming home soon. Love you.) into user device 110-1. As illustrated, user device 110-1 may convert the vocalized message to expressive text (i.e., voice-to-expressive text 120).

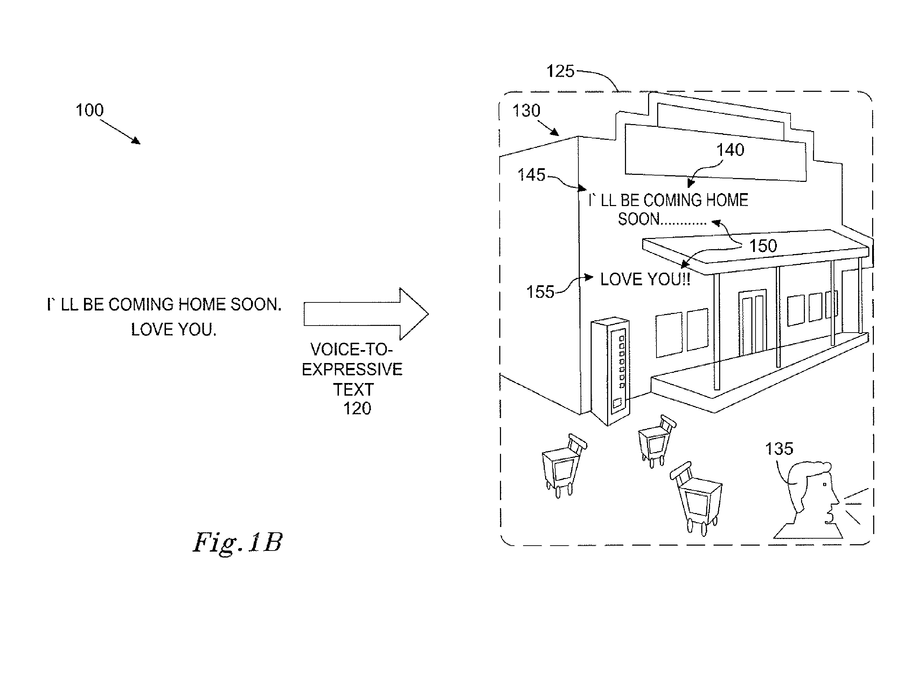

Referring to Fig. 1B, as previously described, the vocal message spoken by user 105-1 may be converted to expressive text. Fig. 1B is a diagram that illustrates exemplary expressive text features. For example, an expressive text message 125 may include a location indicator 130 that indicates user's 105-1 location. In this example, location indicator 130 may take the form of an image (e.g., an image of a mall). Additionally, a background ambient indicator 135 may indicate a background ambience associated with user 105-1. In this example, background ambient indicator 135 may take the form of an image (e.g., an image of a person speaking) to indicate that one or more persons are speaking in the background.

Additionally, as illustrated, expressive text message 125 may include a textual representation of the vocal message such that vocal characteristics are represented as textual characteristics. For example, "I'll be coming home soon," may include a size of text 140 to represent the volume in which user 105 spoke these words. In this example, user 105-1 may have spoken "I'll be coming home soon" at a medium volume. Additionally, "I'll be coming home soon," may include a style of text 145 to represent gender and/or age of user 105-1. For example, style of text 145 may represent the gender of user 105-1 by using, for example, a cursive font style to represent user's 105 gender (i.e., female). Additionally, or alternatively, style of text 145 may represent the age of user 105-1 by using a particular font style category. For example, font styles may be categorized based on age brackets, such as, for example, childlike, teenage, adult, and elderly. In this example, style of text 145 may indicate the age of user 105-1 (e.g., a teenager) and/or gender of user 105-1 (e.g., female).

Additionally, as illustrated, expressive text message 125 may include punctuations 150 to indicate various vocal characteristics. In this example, ellipses may be used to indicate a pause between words and exclamation points may be used to indicate strong feelings and/or high volume. Additionally, as illustrated, expressive text message 125 may include a mood indicator 155 to indicate a mood of user 105-1. According to an exemplary implementation, user device 110-1 may include a facial recognition system to determine the mood of the user. The mood of user 105-1 may be represented by color (i.e., color of the text). In this example, the mood of user 105-1 may be happy and represented by colored text (e.g., a dark blue).

As a result of the foregoing, voice-to-expressive text may provide user 105-2 an enhanced representation of the vocal message spoken by user 105-1. Since an exemplary embodiment of voice-to-expressive text has been broadly described, a detailed description that includes variations to the above is described further below.

### EXEMPLARY USER DEVICE

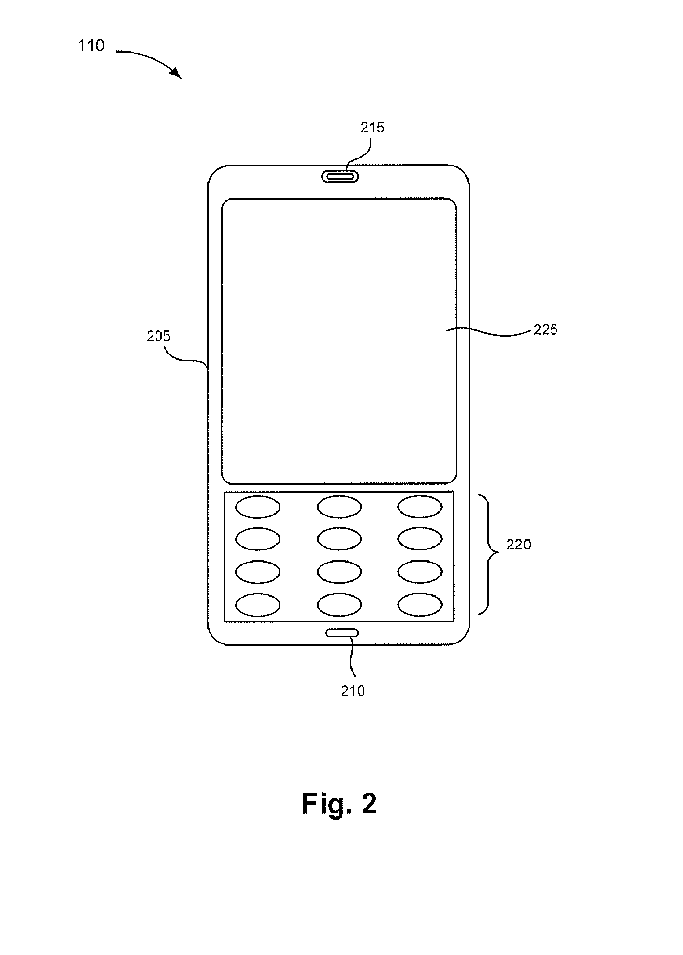

Fig. 2 is a diagram of an exemplary user device 110 in which exemplary embodiments described herein may be implemented. As illustrated in Fig. 2, user device 110 may comprise a housing 205, a microphone 210, speakers 215, keys 220, and a display 225. According to other embodiments, user device 110 may comprise fewer components, additional components, different components, and/or a different arrangement of components than those illustrated in Fig. 2 and described herein. For example, in some implementations, user device 110 may include a camera. Additionally, user device 110 may take the form of a different configuration (e.g., a slider device, a clamshell device, etc.) than the configuration illustrated in Fig. 2.

Housing 205 may comprise a structure to contain components of user device 110. For example, housing 205 may be formed from plastic, metal, or some other type of material. Housing 205 may support microphone 210, speakers 215, keys 220, and display 225.

Microphone 210 may transduce a sound wave to a corresponding electrical signal. For example, a user may speak into microphone 210 during a telephone call or to execute a voice command. Speakers 215 may transduce an electrical signal to a corresponding sound wave. For example, a user may listen to music or listen to a calling party through speakers 215.

Keys 220 may provide input to user device 110. For example, keys 220 may comprise a standard telephone keypad, a QWERTY keypad, and/or some other type of keypad (e.g., a calculator keypad, a numerical keypad, etc.). Keys 220 may also comprise special purpose keys to provide a particular function (e.g., send, call, e-mail, etc.).

Display 225 may operate as an output component. For example, display 225 may comprise a liquid crystal display (LCD), a plasma display panel (PDP), a field emission display (FED), a thin film transistor (TFT) display, or some other type of display technology.

Additionally, according to an exemplary implementation, display 225 may operate as an input component. For example, display 225 may comprise a touch-sensitive screen. In such instances, display 225 may correspond to a single-point input device (e.g., capable of sensing a single touch) or a multipoint input device (e.g., capable of sensing multiple touches that occur at the same time). Further, display 225 may be implemented using a variety of sensing technologies, including but not limited to, capacitive sensing, surface acoustic wave sensing, resistive sensing, optical sensing, pressure sensing, infrared sensing, or gesture sensing. Display 225 may also comprise an auto-rotating function.

Display 225 may be capable of displaying text, pictures, and/or video. Display 225 may also be capable of displaying various images (e.g., icons, objects, etc.) that may be selected by a user to access various applications, enter data, and/or navigate, etc.

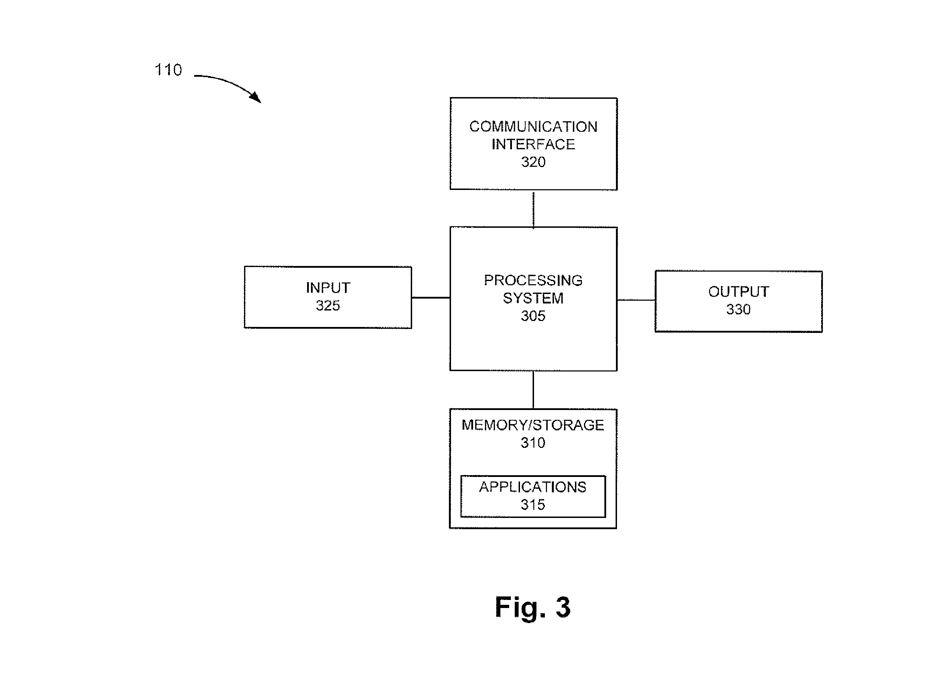

Fig. 3 is a diagram illustrating exemplary components of user device 110. As illustrated, user device 110 may comprise a processing system 305, a memory/storage 310 that may comprise applications 315, a communication interface 320, an input 325, and an output 330. According to other embodiments, user device 110 may comprise fewer components, additional components, different components, or a different arrangement of components than those illustrated in Fig. 3 and described herein.

Processing system 305 may comprise one or multiple processors, microprocessors, co-processors, application specific integrated circuits (ASICs), controllers, programmable logic devices, chipsets, field programmable gate arrays (FPGAs), application specific instruction-set processors (ASIPs), system-on-chips (SOCs), and/or some other component that may interpret and/or execute instructions and/or data. Processing system 305 may control the overall operation or a portion of operation(s) performed by user device 110. Processing system 305 may perform one or more operations based on an operating system and/or various applications (e.g., applications 315).

Processing system 305 may access instructions from memory/storage 310, from other components of user device 110, and/or from a source external to user device 110 (e.g., a network or another device).

Memory/storage 310 may comprise one or multiple memories and/or one or multiple secondary storages. For example, memory/storage 310 may comprise a random access memory (RAM), a dynamic random access memory (DRAM), a read only memory (ROM), a programmable read only memory (PROM), a flash memory, and/or some other type of memory. Memory/storage 310 may comprise a hard disk (e.g., a magnetic disk, an optical disk, a magnetooptic disk, a solid state disk, etc.) or some other type of computer-readable medium, along with a corresponding drive. Memory/storage 310 may also comprise a memory, a storage device, or storage component that is external to and/or removable from user device 110, such as, for example, a Universal Serial Bus (USB) memory stick, a dongle, a hard disk, mass storage, offline storage, etc.

The term "computer-readable medium," as used herein, is intended to be broadly interpreted to comprise, for example, a memory, a secondary storage, a compact disc (CD), a digital versatile disc (DVD), or the like. The computer-readable medium may be implemented in a single device, in multiple devices, in a centralized manner, or in a distributed manner. Memory/storage 310 may store data, application(s), and/or instructions related to the operation of user device 110.

Memory/storage 310 may store data, applications 315, and/or instructions related to the operation of user device 110. Applications 315 may comprise software that provides various services or functions. By way of example, but not limited thereto, applications 315 may comprise a telephone application, a voice recognition application, a video application, a multimedia application, a music player application, a contacts application, a calendar application, an instant messaging application, a web browsing application, a location-based application (e.g., a Global Positioning System (GPS)-based application), a blogging application, and/or other types of applications (e.g., a word processing application, a spreadsheet application, a facial expression application, a facial recognition application, etc.). Applications 315 may comprise one or more applications for converting voice to expressive text.

Communication interface 320 may permit user device 110 to communicate with other devices, networks, and/or systems. For example, communication interface 320 may comprise one or multiple wireless and/or wired communication interfaces. Communication interface 320 may comprise a transmitter, a receiver, and/or a transceiver. Communication interface 320 may operate according to various protocols, communication standards, or the like.

Input 325 may permit an input into user device 110. For example, input 325 may comprise microphone 210, keys 220, display 225, a touchpad, a button, a switch, an input port, voice recognition logic, fingerprint recognition logic, a web cam, and/or some other type of visual, auditory, tactile, etc., input component. Output 330 may permit user device 110 to provide an output. For example, output 330 may comprise speakers 215, display 225, one or more light emitting diodes (LEDs), an output port, a vibratory mechanism, and/or some other type of visual, auditory, tactile, etc., output component.

User device 110 may perform operations in response to processing system 305 executing software instructions contained in a computer-readable medium, such as memory/storage 310. For example, the software instructions may be read into memory/storage 310 from another computer-readable medium or from another device via communication interface 320. The software instructions stored in memory/storage 310 may cause processing system 305 to perform various processes described herein. Alternatively, user device 110 may perform processes based on hardware, hardware and firmware, and/or hardware, software and firmware.

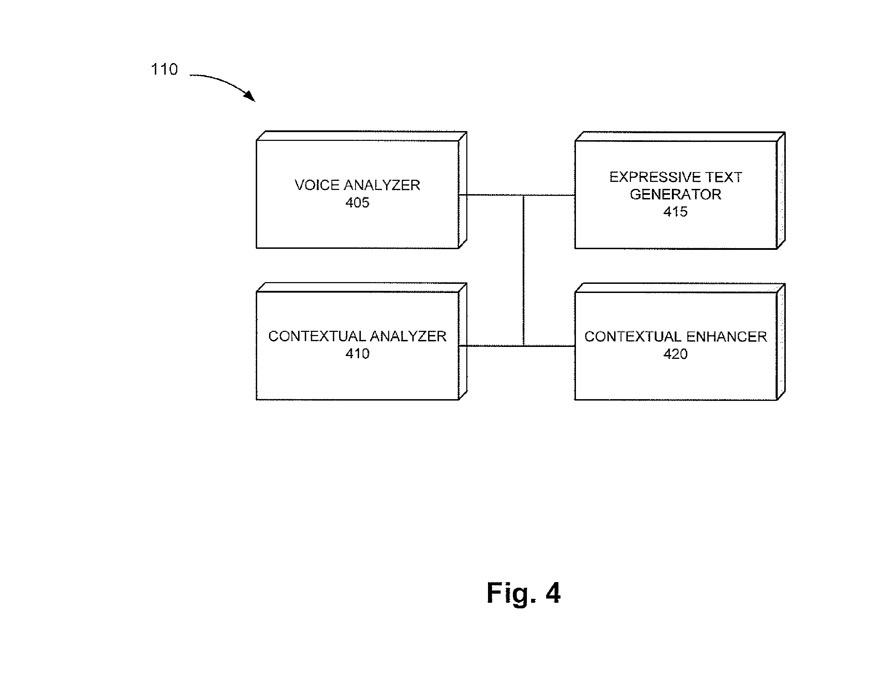

Fig. 4 is a diagram illustrating exemplary functional components of user device 110. As illustrated, user device 110 may include a voice analyzer 405, a contextual analyzer 410, an expressive text generator 415, and a contextual enhancer 420. Voice analyzer 405, contextual analyzer 410, expressive text generator 415, and/or contextual enhancer 420 may be implemented as a combination of hardware (e.g., processing system 305, etc.) and software (e.g., applications 315, etc.) based on the components illustrated and described with respect to Fig. 3. Alternatively, voice analyzer 405, contextual analyzer 410, expressive text generator 415, and/or contextual enhancer 420 may be implemented as hardware, hardware and firmware, or hardware, software, and firmware based on the components illustrated and described with respect to Fig. 3.

Voice analyzer 405 may analyze words spoken by a user and convert those words to text. For example, voice analyzer 405 may include a voice-to-text converter. Additionally, voice analyzer 405 may interpret vocal characteristics associated with the spoken words. Voice analyzer 405 may interpret vocal characteristics, such as, for example, gender of the user, age of the user, pitch, intonation, mood of the user, tempo of the spoken words, gaps or pauses between each spoken word, volume of the spoken words, tonal quality, etc. For example, format analysis, fundamental frequency analysis, and/or other types of voice biometrics may be used to identify an age and/or a gender associated with the user. Additionally, or alternatively, formant analysis, fundamental frequency analysis, and/or other types of voice biometrics may be used to identify a pitch, an intonation, and/or a tonal quality associated with the user's voice. Voice analyzer 405 may also identify other vocal characteristics, such as, for example, volume, etc. The voice-to-text converter may identify the spoken words, gaps, pauses, etc., in speech, as well as a tempo associated with the words spoken. According to an exemplary embodiment, the voice-to-text converter may identify shared lingo between users, as described further below.
Additionally, or alternatively, voice analyzer 405 may include a facial expression functional component to identify the mood of the user. The facial expression function component may also identify other user characteristics, such as, for example, gender and/or age. For example, as previously described, user device 110 may include a camera that provides image data to voice analyzer 405.

Contextual analyzer 410 may analyze contextual characteristics associated with the environment in which the user is located. For example, contextual analyzer 410 may determine a location of the user. By way of example, but not limited thereto, contextual analyzer 410 may include a Global Positioning System (GPS) receiver. Alternatively, contextual analyzer 410 may use other conventional methods to determine the location of the user, such as, for example, cellular positioning, indoor positioning systems, etc. Additionally, or alternatively, context analyzer 410 may evaluate background ambience. For example, contextual analyzer 410 may determine whether the user is in a noisy place, a quiet place, an outdoor place, etc., as well as characteristics associated with the background ambience, such as, for example, people talking, cars honking their horns, city noise, birds chirping, music playing in the background, etc. According to an exemplary implementation, contextual analyzer 410 may interpret the background ambience associated with the vocal input of the user based on samplings of the audio data. Contextual analyzer 410 may use, for example, filtering or other audio processing to isolate and/or enhance the background ambience so that it may be determined whether the user is in a noisy place, etc., and/or other characteristics associated with the background ambience.

Expressive text generator 415 may introduce textual characteristics based on the vocal characteristics and/or user characteristics provided by voice analyzer 405. According to an exemplary implementation, expressive text generator 415 may map vocal characteristics to textual characteristics. For example, the textual characteristics may include font size, font style, font weight (e.g., boldness, etc.), font effects (e.g., animation, etc.), etc. Expressive text generator 415 may also use punctuation, all capital letters, and/or color to represent the user's vocalization and/or characteristics associated therewith. A further description of a mapping between vocal characteristics and/or user characteristics with textual characteristics is provided below.

Contextual enhancer 420 may introduce visual contextual data with the expressive text based on contextual characteristics provided by contextual analyzer 410. According to an exemplary implementation, contextual enhancer 420 may map contextual characteristics to the visual contextual data. For example, contextual enhancer 420 may introduce an image, an icon, or the like, representative of, or text descriptive of, the user's location. For example, contextual enhancer 420 may include an image or an icon representative of a restaurant, when the user location is at a restaurant. Additionally, or alternatively, contextual enhancer 420 may introduce an image, an icon, or the like, representative of, or text descriptive of, the background ambience. For example, contextual enhancer 420 may include an image or an icon representative of a person gesturing to be quiet, when the background ambience corresponds to a quiet environment. A further description of a mapping between contextual characteristics with visual contextual data is provided below.

Although Fig. 4 illustrates exemplary functional components of user device 110, in other implementations, user device 110 may include fewer functional components, additional functional components, different functional components, and/or a different arrangement of functional components than those illustrated in Fig. 4 and described. Additionally, or alternatively, one or more operations described as being performed by a particular functional component may be performed by one or more other functional components, in addition to or instead of the particular functional component, and/or one or more functional components may be combined.

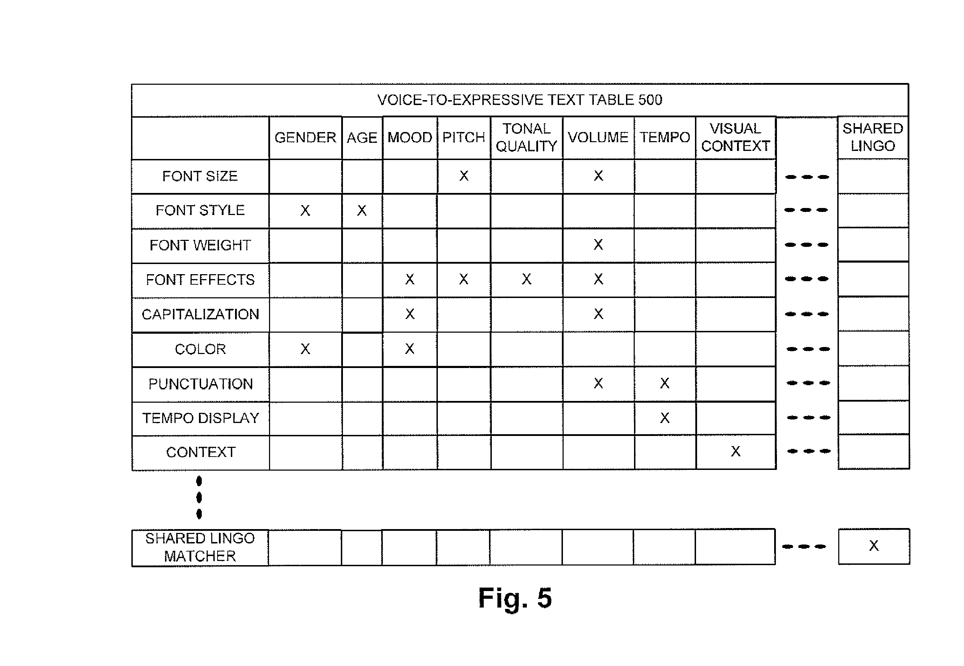

As previously described, according to an exemplary embodiment, voice-to-expressive text may include a mapping between vocal characteristics, user characteristics, contextual characteristics, etc., to textual characteristics, visual contextual data, etc. While, with reference to Figs. 1A and 1B, voice-to-expressive text may be applied to text communications (e.g., an e-mail, an SMS message, an MMS message, etc), voice-to-expressive text may be applied to other platforms, such as, for example, using voice-to-expressive text to post text on a web page, a blog, a message board, or other types of document. Fig. 5 is a diagram illustrating an exemplary mapping. According to other implementations, additional mappings, different mappings, and/or fewer mappings between vocal characteristics, etc., and textual characteristics, etc., may be used.

As illustrated, the exemplary mapping may take the form of a voice-to-expressive text table 500 that includes mappings, as previously described. For example, voice-to-expressive text table 500 may include, as illustrated in the rows, textual characteristics, such as, font size, font style, font weight (e.g., boldness, etc.), font effects (e.g., animation, etc.), capitalization, and color, along with grammatical characteristics, such as, for example, punctuation. Voice-to-expressive text table 500 may also include a tempo display characteristic. The tempo display characteristic may provide that a tempo of the vocalization is retained in a visual and/or textual form by displaying the expressive text according to a rhythm in which the words are vocalized. Additionally, as previously described, voice-to-expressive text table 500 may include context information, such as, for example, visual contextual data. For example, visual contextual data may correspond to data indicating the location of the user, the background ambience, etc.

Further, voice-to-expressive text table 500 may include a shared lingo characteristic matcher. The shared lingo characteristic matcher may visually express (e.g., textually, imagewise, etc.) lingo shared between users in a like way. For example, it is common for friends, family members, co-workers, etc., to use common expressions. By way of example, but not limited thereto, assume that two users share the expression "Hang in there." Further, in some instances, the two users may also verbalize the expression in a similar manner in terms of pitch, intonation, gesticulation, etc. According to exemplary embodiment, the shared lingo characteristic matcher would permit a vocalization of this shared expression to be displayed as a textual expression in a like manner between the two users. That is, for example, the same style font, size of font, font effect, etc., may be used to display the shared expression to each user whenever the other user vocalizes that shared expression.

Voice-to-expressive text table 500 may also include, as illustrated in the columns, user characteristics, such as, for example, gender, age, and mood. Voice-to-expressive text table 500 may also include vocal characteristics, such as, for example, gender, age, pitch, tonal quality, and volume. Voice-to-expressive txt table 500 may also include a tempo characteristic corresponding to the tempo of the vocalization, as well as contextual characteristics. Further, voice-to-expressive text table 500 may include a shared lingo characteristic, as described further below.

As previously described, according to an exemplary embodiment, voice-to-expressive text may include various mappings between the characteristics included in voice-to-expressive text table 500. By way of example, but not limited thereto, and as illustrated in column fashion, and as indicated by X's in voice-to-expressive text table 500, gender may be mapped to color (e.g., feminine colors, male colors) and/or font style (e.g., cursive font styles for female, angular font styles for male); age may be mapped to font style (e.g., childlike, teenage, adult, elderly font style categories); mood may be mapped to font effects (e.g., animation), capitalization (e.g., to illustrate seriousness of user and importance of word(s)), and/or color (e.g., red = angry, blue = happy, etc.); pitch and/or intonation may be mapped to font size (e.g., changing font size from small to large in correspondence to an increase in pitch or intonation, or changing font size from large to small in correspondence to a decrease in pitch or intonation) and/or font effects (e.g., animations reflecting changes in pitch or intonation); tonal quality (e.g., rough voice, calm voice, etc.) may be mapped to font effects (e.g., animations reflecting tonal qualities); volume may be mapped to font size, font weight, font effects, capitalization, and/or punctuation; tempo may be mapped to punctuation and/or tempo display (as described further below); visual context may be mapped to context (e.g., user location, background ambience, etc.); and shared lingo may be mapped to shared lingo matcher (as described further below).

With reference to tempo and tempo display, words vocalized by a user may be displayed in expressive text according to a tempo in which the words are spoken. For example, tempo display may include tempo information corresponding to the tempo of a vocalized message so that a device may display the expressive text (e.g., the words, etc.) in correspondence to the tempo of the vocalized message. For example, the tempo information may account for pauses in speech, protraction of a word (e.g., the word "and" - vocalized as "aaand"), contraction of a word (e.g., the word "no"- vocalized in a curt or quick manner, etc.), tempo in which words are spoken (e.g., some words may be spoken as a group, other words may be spoken in isolation with respect to other words, etc), etc. According to an exemplary embodiment, pauses having a duration exceeding a threshold value may provide that a portion of the expressive text message is displayed and then scrubbed (i.e., no longer displayed), followed by displaying a next sequence of expressive text. According to another embodiment, the entire expressive text message may be displayed (i.e., without scrubbing). That is, one portion of the expressive text followed by the next sequence of expressive text in correspondence to the tempo (e.g., including pauses in the speech). This is in contrast to conventional text communication in which a text message is displayed to the user in its entirety all at the same time.

With reference to shared lingo information, according to an exemplary embodiment, voice analyzer 405 (e.g., the voice-to-text converter) may identify shared lingo between users with respect to expressive text messages sent and/or received by the user. For example, voice analyzer 405 may compare expressive text messages sent and received by the user to/from another user. Based on the comparison, voice analyzer 405 may identify shared lingo (e.g., slang, common phrases or words, greetings in messages, closings in messages, etc.). Alternatively, a user may identify shared lingo in expressive text messages sent and/or received. According to an exemplary implementation, shared lingo of voice-to-expressive text table 500 may include words, phrases, etc., shared between the users, such as, for example, a common greeting in an expressive text message (e.g., "Hey Bud," etc.), a common closing in an expressive text message (e.g., "Later dude," "See ya," etc.), or other word(s), phrases, etc., within a body of an expressive text message.

Shared lingo matcher of voice-to-expressive text table 500 may include a selection of expressive textual characteristics that are mapped to the shared word(s), phrase(s), etc., (i.e., the shared lingo) so that expressive text generator 415 may use the shared lingo matcher information to visually express the shared lingo between the user in a like way, as previously described. For example, the user may vocalize a shared greeting, which is converted to expressive text. When the other user receives the expressive text, user device 110 may identify a common greeting as shared lingo and store the textual characteristics associated with the common greeting. When the other user vocalizes the shared greeting, user device 110 may identify the shared greeting and use the pre-stored textual characteristics. According to another exemplary embodiment, the user may be permitted to edit and/or select textual characteristics for shared lingo.

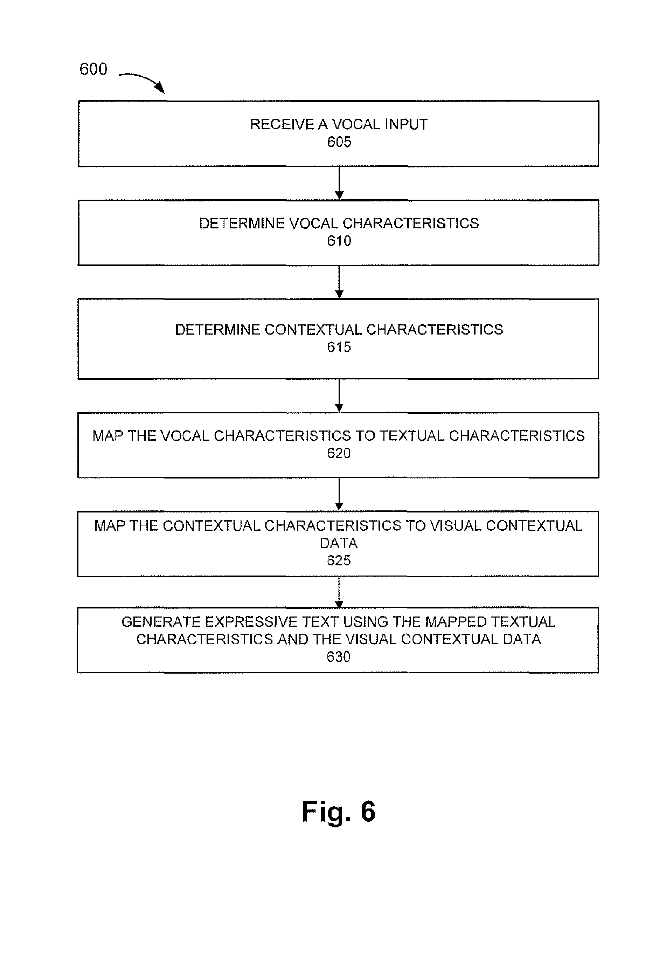

Fig. 6 is a flow diagram illustrating an exemplary process 600 for convening voice to expressive text. According to an exemplary implementation, process 600 may be performed by user device 110.

Process 600 may include receiving a vocal input (block 605). For example, a user may vocalize a message that is received by user device 110 via microphone 210. The message may correspond to an email, an SMS message, an MMS message, an IM, or the like. Alternatively, the message may correspond to some entry of data into a document (e.g., a web page, etc.).

Vocal characteristics are determined (block 610) and contextual characteristics are determined (block 615). As previously described, according to an exemplary implementation, voice analyzer 405 may interpret vocal characteristics associated with the user's spoken words. For example, the vocal characteristics may include gender of the user, age of the user, pitch, intonation, mood of the user, volume of the spoken words, tonal quality, tempo of the spoken words, etc. Voice analyzer 405 may also identify shared lingo, as previously described. Additionally, as previously described, according to an exemplary implementation, contextual analyzer 410 may determine contextual characteristics, such as, for example, the location of the user and/or background ambience.

Vocal characteristics are mapped to textual characteristics (block 620) and contextual characteristics are mapped to visual contextual data (block 625). As previously described, according to an exemplary implementation, expressive text generator 415 may map vocal characteristics to textual characteristics. For example, the textual characteristics may include font size, font style, font weight, font effects, etc., in addition to textual expressive forms, such as, for example, capitalization, color, and/or punctuation. Further, as previously described, according to an exemplary implementation, contextual enhancer 420 may map the contextual characteristics to the visual contextual data. For example, the visual contextual data may include an image, an icon, or the like, representative of, or text descriptive of, the user's location and/or the background ambience.

The expressive text is generated using the mapped textual characteristics and the visual contextual data (block 630). As previously described, user device 110 may generate an expressive text using the mapped textual characteristics and the visual contextual data. The expressive text may be output from user device 110 (e.g., sent as an expressive text message, entered into a document, etc.). Additionally, as previously described, and with reference to tempo and tempo display, user device 110 may provide that the expressive text is displayed in correspondence to the tempo in which the spoken words are vocalized. Further, as previously described, according to an exemplary implementation, and with reference to shared lingo and shared lingo matcher, user device 110 may provide that shared lingo is expressed using like textual characteristics between users.

Although Fig. 6 illustrates an exemplary process 600, in other implementations, process 600 may include additional operations, fewer operations, and/or different operations than those illustrated and described with respect to Fig. 6. In addition, while a series of blocks has been described with regard to process 600, the order of the blocks may be modified in other implementations. Further, non-dependent blocks may be performed in parallel.

The foregoing description of implementations provides illustration, but is not intended to be exhaustive or to limit the implementations to the precise form disclosed. Modifications and variations are possible in light of the above teachings or may be acquired from practice of the teachings. For example, the difference in volume between the voice of the user relative to the background ambience may be represented by intensity of color associated with the expressive text. For example, when the background ambience is silent, the expressive text may be intensely colored. Conversely, when the background ambience is noisy, the expressive text may be colored less intensely and/or the expressive text may exhibit a small degree of blurriness. Additionally, or alternatively, expressive text may be included in comic magazine style text bubbles that visually change according to the user's vocal characteristics, etc. Additionally, a user device may collect data (e.g., prior history) associated with voice-to-expressive text to calibrate mappings, characteristics associated with mappings (e.g., mood, etc). For example, data may be analyzed with respect to a particular user to enhance the performance of voice-to-expressive text.

The terms "comprise," "comprises," "comprising," as well as synonyms thereof (e.g., include, etc.), when used in the specification is taken to specify the presence of stated features, integers, steps, or components but does not preclude the presence or addition of one or more other features, integers, steps, components, or groups thereof. In other words, these terms mean inclusion without limitation.

The article "a," "an," and "the" are intended to mean one or more items. Further, the phrase "based on" is intended to mean "based, at least in part, on" unless explicitly stated otherwise. The term "and/or" is intended to mean any and all combinations of one or more of the listed items.

Further certain features described above may be implemented as a "component" or logic that performs one or more functions. This component or logic may include hardware, such as processing system 305 (e.g., one or more processors, one or more microprocessors, one or more ASICs, one or more FPGAs, etc.), a combination of hardware and software (e.g., applications 315), a combination of hardware, software, and firmware, or a combination of hardware and firmware.

No element, act, or instruction used in the present application should be construed as critical or essential to the implementations described herein unless explicitly described as such.

## Claims

1. A method comprising:
receiving (605), by a user device (110), a vocal input including words spoken by a user (105);
determining (610), by the user device (110), vocal characteristics associated with the vocal input;
mapping (620), by the user device (110), the vocal characteristics to textual characteristics; and
generating (630), by the user device (110), a voice-to-expressive text (120) that includes, in addition to text corresponding to the words spoken by the user (105), a textual representation of the vocal characteristics based on the mapping (620).

2. The method of claim 1, wherein the vocal characteristics include one or more of pitch, intonation, tonal quality, volume, gender of the user (105), or age of the user (105), and the textual characteristics include one or more of font size, font weight, font style, font effects, capitalization, punctuation, or color.

3. The method of any one of claims 1 - 2, further comprising:
determining a location of the user (105); and
including an image or an icon representative of the location with the voice-to-expressive text (120).

4. The method of any one of the preceding claims, further comprising:
determining a background ambience associated with a location of the user (105); and
including an image or an icon representative of the background ambience to the voice-to-expressive text (120).

5. The method of any one of the preceding claims, wherein the voice-to-expressive text (120) comprises one of an e-mail, a simple messaging service message, a multimedia messaging service message, or an instant message.

6. The method of any one of the preceding claims, further comprising:
determining a tempo associated with the words spoken by the user (105); and
displaying the voice-to-expressive text (120) according to the tempo.

7. The method of any one of the preceding claims, wherein the textual characteristics include font style, gender, and age, and the method further comprising:
storing front style categories corresponding to gender and age;
obtaining a facial expression of the user (105);
determining at least one of a gender of the user (105) or an age of the user (105) based on the facial expression; and wherein the mapping (620) further comprises:
mapping at least one of a font style to the gender of the user (105) or a font style to the age of the user (105) based on the stored font style categories.

8. The method of any one of the preceding claims, further comprising:
receiving a text communication that includes a first voice-to-expressive text (120); and
identifying a lingo shared between the user (105-1) and another user (105-2) in the first voice-to-expressive text (120); and wherein when the vocal input includes the lingo, the generating further comprises:
generating the textual representation of the lingo to correspond to the textual representation of the lingo included in the first voice-to-expressive text (120).

9. A user device (110) comprising:
one or more memories (310) storing instructions; and
one or more processing systems (305) to execute the instructions that configure the one or more processing systems (305) to:
receive a vocal input that includes words spoken by a user (105);
perform voice analysis to determine vocal characteristics associated with the vocal input;
map the vocal characteristics to textual characteristics; and
generate a voice-to-expressive text (120) that includes text corresponding to the words spoken by the user (105) and a textual representation of the vocal characteristics based on the mapping.

10. The user device (110) of claim 9, wherein the user device (110) comprises a radio telephone.

11. The user device (110) of any one of claims 9-10, wherein when performing voice analysis the one or more processing systems (305) are configured to:
determine one or more of pitch, intonation, tonal quality, volume, gender of the user (105), or age of the user (105); and wherein the textual characteristics include one or more of font size, font weight, font style, font effects, capitalization, punctuation, or color.

12. The user device (110) of any one of claims 9-11, wherein the voice-to-expressive text (120) comprises one of an e-mail, a simple messaging service message, a multimedia messaging service message, or an instant message.

13. The user device (110) of any one of claims 9-12, wherein the one or more processing systems (305) are further configured to:
obtain a facial expression of the user (105);
determine one or more of a mood of the user (105), an age of the user (105), or a gender of the user (105); and wherein the textual characteristics include color and font style, and when mapping, the one or more processing systems (305) are further configured to perform one or more of:
map the mood of the user (145) to a color of the text corresponding to the words spoken by the user (105);
map the age of the user (105) to a font style category corresponding to the age of the user (105); or
map the gender of the user (105) to a font style category corresponding to the gender of the user (105).

14. The user device (110) of any one of claims 9 - 13, wherein the one or more processing systems (305) are further configured to:
determine a background ambience associated with a location of the user (105); and
provide an image or an icon representative of the background ambience to the voice-to-expressive text (120);
determine a location of the user (105); and
include an image or an icon representative of the location to the voice-to-expressive text (120).

15. The user device (110) of any one of claims 9 - 14, wherein the one or more processing systems (305) are further configured to:
determine a tempo associated with the words spoken by the user (105); and
display the voice-to-expressive text (120) according to the tempo, wherein if the words spoken by the user (105) includes a pause exceeding a threshold value of time, the displaying includes:
display a first portion of the voice-to-expressive text (120) occurring before the pause for a first period of time; followed by not displaying the first portion of the voice-to-expressive text (120); and followed by displaying a second portion of the voice-to-expressive text (120) occurring after the pause for a second period of time.
